# EUROPÄISCHE PATENTSCHRIFT

(11) **EP 3 239 002 B1**
(45) Veröffentlichungstag und Bekanntmachung des Hinweises auf die Patenterteilung: **05.10.2022**
(21) Anmeldenummer: 17166416.2
(22) Anmeldetag: 13.04.2017
(51) Int. Cl.: B60R 11/00, B08B 15/00, F01N 13/08, F16B 1/00, F16B 47/00

(54) **ABGASABSAUGVORRICHTUNG**
EXHAUST GAS EXTRACTOR
DISPOSITIF D'ASPIRATION DE GAZ D'ÉCHAPPEMENT

(30) Priorität: 19.04.2016 DE 102016107205; 01.09.2016 DE 102016116394
(43) Veröffentlichungstag der Anmeldung: 01.11.2017
(73) Patentinhaber: KORA GmbH, 42119 Wuppertal (DE)
(72) Erfinder: Abd El Razek, Bahij, 40597 Düsseldorf (DE)
(74) Vertreter: Grundmann, Dirk

(56) Entgegenhaltungen:
- EP-A2- 2 138 354
- DE-A1- 4 319 838
- DE-A1- 19 636 939
- DE-A1-102011 002 020
- DE-U1- 9 400 360
- DE-U1- 9 400 360
- US-A- 2 733 668
- US-A- 2 990 198
- US-A- 5 330 234
- US-A1- 2013 320 669
- US-A1- 2014 367 437

## Beschreibung

### Gebiet der Technik

Die Erfindung betrifft eine Vorrichtung zum Absaugen von aus dem Auspuff eines KFZs austretenden Abgasen, mit einer, vor der Mündung des Auspuffs platzierbaren und mit einem Absaugschlauch verbindbaren Absaugtülle.

### Stand der Technik

Eine Vorrichtung der zuvor beschriebenen Art wird in Kraftfahrzeugwerkstätten verwendet, um von Kraftfahrzeugen, die dort auf einem Teststand geprüft werden, die Auspuffgase abzusaugen. Zum Stand der Technik gehören Vorrichtungen, die eine Absaugtülle aufweisen, die mit einem Absaugschlauch verbunden ist. Die Absaugtülle kann mit einer Klemmvorrichtung am Auspuff befestigt werden. Derartige Vorrichtungen beschreiben bspw. die DE 298 14 183 U1, DE 20 2004 002 617 U1 und DE 94 00 360 U1.

Aus der DE 29 28 519 A1 ist eine Vorrichtung zum Absaugen von gasförmigen Schadstoffen bekannt, bei der ein Absaugschlauch an einem Absaugkanal befestig werden kann, der einen Saugschlitz aufweist, der von scheibenförmigen Gliederelementen verschlossen ist, so dass an jeder x-beliebigen Stelle des Saugkanales ein Schlauchwagen platziert werden kann.

Bei derzeitig modernen Kraftfahrzeugen ist die Auspuffanlage gestalterisch in der Karosserie derart integriert, dass ein Aufstecken einer Tülle auf den Auspuff aus technischen Gründen nicht möglich ist. Es gibt im Stand der Technik der Umrisskontur dem Kraftfahrzeug angepasste Hauben, die an der Rückseite des Kraftfahrzeuges stromabwärts des Auspuffs auf dem Fußboden platziert werden können, um durch einen Unterdruck in einen Absaugschlauch gesaugt werden zu können, durch den sie abtransportiert werden.

Eine Absaugvorrichtung, die mittels eines von einem Band oder Seil ausgebildeten Befestigungselementes unter Verwendung eines Saugnapfes an der Korosserie eines Kraftfahrzeuges befestigbar ist, wird in der US 2013/0320669 A1 beschrieben.

### Zusammenfassung der Erfindung

Der Erfindung liegt die Aufgabe zugrunde, eine Vorrichtung anzugeben, die in einfacher Weise an Kraftfahrzeugen zum Absaugen der Abgase verwendet werden kann, bei denen der Auspuff gestalterisch in die Karosserie integriert ist.

Gelöst wird die Aufgabe durch die im Anspruch 1 angegebene Erfindung. Vorgeschlagen wird dort eine Aufrollvorrichtung mit einem Rastgesperre. Die Absaugtülle kann mit den Befestigungsmitteln unmittelbar an der Karosserie befestigt werden kann. Die Befestigung erfolgt bevorzugt oberhalb des Auspuffs unmittelbar am Kraftfahrzeug, beispielsweise an einer Rückleuchte, an einer Stoßstange, an einem Aufbauteil, an einer Heckklappe oder einem anderen, bevorzugt glattwandigen Bereich der Karosserie. Die Befestigungsmittel umfassen auch ein Verbindungselement, welches biegeelastisch ist. Es ist ein Band oder Seil. Das Verbindungselement verbindet ein Befestigungselement mit der Absaugtülle. Bei dem Befestigungselement kann es sich um einen Saugnapf handeln, der an einer glatten Oberfläche der Karosserie oder der Stoßstange oder der Heckscheibe befestigt werden kann. In einer Weiterbildung der Erfindung ist vorgesehen, dass das Befestigungselement im Inneren eines Kofferraums befestigt werden kann. Das Band oder das Seil kann dann zwischen den Dichtungen der geschlossenen Kofferraumklappe nach außen geführt sein. Diese Variante hat den Vorteil, dass die Außenhaut des Kraftfahrzeuges nicht beeinträchtigt wird. Bei dem Befestigungselement kann es sich auch um einen Kletthakenträger handeln, der an der Kofferraumverkleidung angeheftet werden kann. Die Kofferraumverkleidung besteht üblicherweise aus Schlaufen, insbesondere genadelte Schlaufen aufweisendem Gewebe oder Gewirk. Das Befestigungselement kann mit dem Befestigungsmittel mit der Absaugtülle verbunden sein. In der Absaugtülle befindet sich die Aufrollvorrichtung, um das Band oder Seil bei einem Nichtgebrauch der Vorrichtung in einer Verwahrstellung zu halten, oder um die Länge des Befestigungsmittels beim Gebrauch auf das erforderliche Maß einzustellen. Hierzu weist die Seilaufrollvorrichtung ein Rastgesperre auf, so dass nur die erforderliche Band- oder Seillänge aus der Seilaufrollvorrichtung herausgezogen werden muss. Die Aufrollvorrichtung weist eine Wickeltrommel auf, auf die ein Band oder ein Seil aufgewickelt ist. Über eine Spiralfeder kann die Trommel in einer Drehrichtung Federkraft beaufschlagt sein. Die Feder wird gespannt, wenn das Befestigungsmittel aus der Aufrollvorrichtung herausgezogen wird und ist in der Lage, das Befestigungsmittel wieder aufzurollen. Es wird ein Betätigungsknopf vorgesehen, der eine Drehsperre der Trommel von einer Sperrstellung, in der die Trommel nicht gedreht werden kann, in eine Freigabestellung zu verlagern, in der die Trommel gedreht werden kann. Das Befestigungselement kann über eine Spannvorrichtung gespannt werden. Es kann sich dabei um einen Kniehebel oder um eine mit einem Gewinde versehene Spannvorrichtung handeln, bspw. eine Spannmutter. Hierzu kann sich eine aus einem festen Werkstoff bestehende Spannhaube auf dem Rand des aus weichem Kunststoff bestehenden Saugnapfs abstützen. Mit einem Zugmittel kann der Saugnapf weg von der Oberfläche, an der der Saugnapf befestigt ist, gezogen werden, so dass sich im Saugnapf ein Unterdruck aufbaut. Es ist aber auch vorgesehen, den Unterdruck mit einer Saugleitung aufzubauen. Die Saugleitung kann parallel zum Verbindungselement, bspw. dem Band oder Seil, geführt sein. Die Saugleitung kann aber auch das Verbindungselement selbst ausbilden oder im Seil integriert sein. Die Absaugtülle weist einen Griff auf, der einen Griffbügel besitzt, an dem die Hand eines Benutzers angreifen kann. Der Handgriff sitzt an der Aufrollvorrichtung. Die Absaugtülle kann aus einem weichen Kunststoff oder aus Gummi bestehen. Sie besitzt eine Eintrittsöffnung und eine Austrittsöffnung. An der Austrittsöffnung kann der Absaugschlauch befestigt werden. Dies kann direkt, d.h. unmittelbar aber auch über ein Reduzierstück erfolgen, so dass Absaugschläuche mit unterschiedlichen Durchmessern an der Absaugtülle befestigt werden können. Absaugseitig kann die Absaugtülle einen Muffenabschnitt aufweisen, der in den Absaugschlauch hineingesteckt werden kann. Die Austrittsfläche ist kleiner als die ihr gegenüberliegende Eintrittsfläche. Die Eintrittsfläche kann Ränder besitzen, die sich entlang der Ränder eines Trapezes bzw. eines Rechtecks erstrecken, wobei die Ecken verrundet sind. Die Austrittsfläche hat hingegen bevorzugt eine Kreisform. Eine Achse, die durch die Flächenmittelpunkte der Eintrittsfläche und Austrittsfläche verläuft, wird von der Austrittsfläche bevorzugt senkrecht geschnitten. Die Ränder der Eintrittsfläche liegen bevorzugt in einer Ebene, die zur Achse um einen Neigungswinkel geneigt ist. Dieser kann zwischen 50° und 70° betragen. Eine bevorzugte Ausbildung der erfindungsgemäßen Vorrichtung besitzt eine beim Gebrauch nach unten weisende Seite, die parallel zu einer im Gebrauch nach oben weisenden Seite verläuft. In Richtung der Achse ist die untere Seite länger als die obere Seite. In der Mitte der oberen Seite kann die Aufrollvorrichtung mit Griff befestigt sein. Sie kann ein Gehäuse aus einem harten Kunststoff besitzen. Das Kunststoffgehäuse kann mittels einer Winkelkonsole an dem Tragkörper befestigt sein. Als Befestigungsmittel kommen insbesondere in Gewinde eingedrehte Schrauben in Betracht. Auf der Wickeltrommel der Aufrollvorrichtung ist ein Band oder Seil aufgewickelt, an dessen freiem Ende sich ein Anschlussstück, bspw. ein Karabinerhaken befindet, mit dem das Band mit einem Saugnapf oder einem anderen geeigneten Befestigungsmittel verbunden ist. Die Vorrichtung kann auch aus mehreren Teilen bestehen, bspw. kann ein Tragkörper aus hartem Kunststoff vorgesehen sein, in dem ein Einsatz aus Weichkunststoff besteht, der die Eintrittsöffnung ausbildet. Der Rand der Eintrittsöffnung kann nicht nur in einer Ebene liegen. Er kann sich auch auf einer in allen drei Raumrichtungen gekrümmten Linie befinden. Der Rand der Eintrittsöffnung kann nicht nur von einem weichen Kunststoff ausgebildet sein. Es ist auch vorgesehen, dass der Rand Borsten trägt, die sich an die Karosserie anlegen. Die Raumkontur des Randes kann eine Universalkontur sein, so dass die Absaugvorrichtung an einer Vielzahl von Kraftfahrzeugtypen verwendet werden kann. Die erfindungsgemäße Vorrichtung ist in einfacher Weise an der Rückseite eines Kraftfahrzeuges montierbar. Zunächst wird die Mündung der Absaugtülle auf Höhe des Auspuffs in eine berührende Anlage an die Karosserie gebracht. Dann wird von der vorzugsweise im Griffbereich angeordneten Aufrolleinrichtung eine Band-/Seillänge abgezogen, die zur Befestigung der Absaugtülle an der Karosserie des Kraftfahrzeuges ausreicht. Hierzu kann ein Entsperrknopf gedrückt werden, der ein Rastgesperre außer Rasteingriff bringt, das im Rasteingriff ein Abrollen des Seiles von der Aufrollvorrichtung verhindert. Am Ende des Bandes oder des Seiles befindet sich ein Saugnapf, der an einer glatten Oberfläche der Rückseite des Kraftfahrzeugs, bspw. an der Stoßstange, der Rückleuchte, der Heckklappe, dem Heckfenster oder dergleichen befestigt werden kann. Der Saugnapf kann eine Spannvorrichtung aufweisen, die entweder mechanisch betätigt werden muss oder aber die über einen Unterdruckschlauch mit einer Vakuumpumpe verbunden ist. Der Angriffspunkt des festen Endes des Seiles oder Bandes ist in Achsrichtung von der Eintrittsöffnung in Richtung der Austrittsöffnung beabstandet, so dass im montierten Zustand das Band oder Seil schräg zum Lot verläuft. Die Masse der Absaugtülle entwickelt somit eine in Horizontalrichtung wirkende Kraftkomponente, mit der sich der Rand der Eintrittsöffnung an der Rückseite der Karosserie ein einem den Auspuff umgebenden Bereich abstützen kann. Das Befestigungsmittel, welches Kletthaken aufweisen kann, kann eine kreisrunde Befestigungsfläche aufweisen, von der eine Vielzahl elastischer Haken ausgehen. Diese Haken können sich in die Schlaufen des die Kofferraumverkleidung bildenden Schlaufengewebes einhaken. Es kommt bevorzugt ein Befestigungsband zur Anwendung, welches durch die Kofferraumdichtung hindurch nach außen geführt ist, so dass die erfindungsgemäße Vorrichtung auch bei geschlossenem Kofferraumdeckel verwendet werden kann.

### Kurze Beschreibung der Zeichnungen

Im Folgenden wird die Erfindung anhand von Ausführungsbeispielen näher erläutert. Es zeigen:

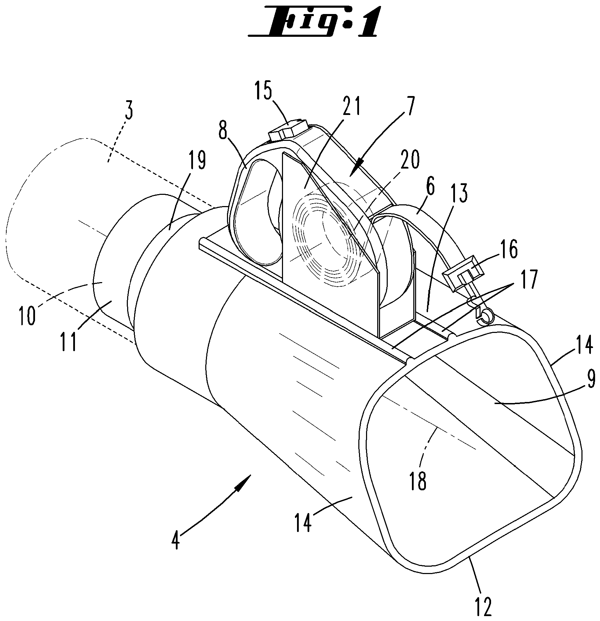

- Fig. 1: eine perspektivische Darstellung der erfindungsgemäßen Absaugtülle,

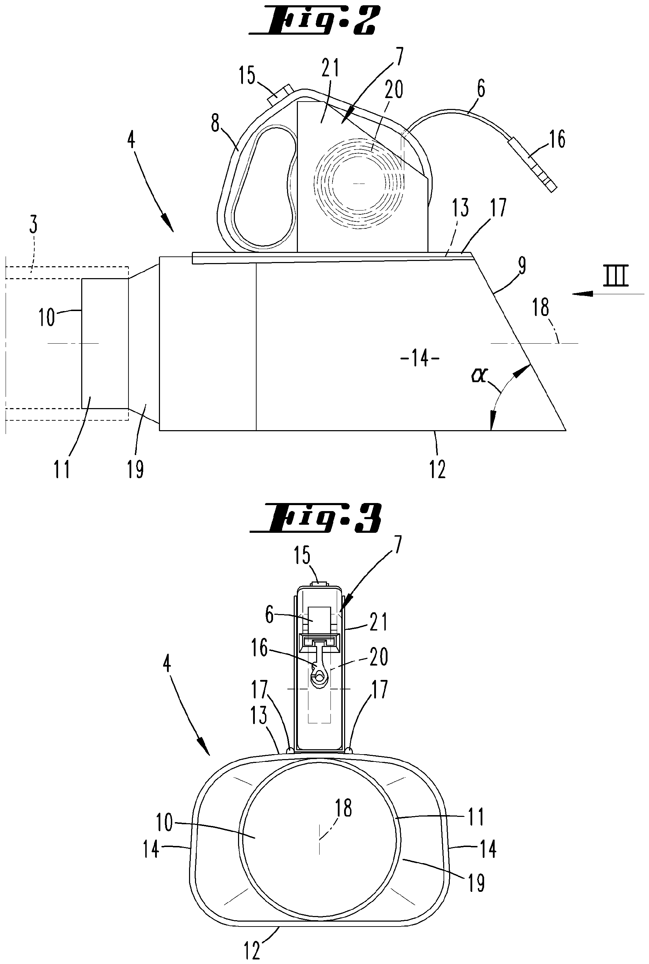

- Fig. 2: eine Seitenansicht,
- Fig. 3: die Ansicht gemäß Pfeil III in Fig. 2,
- Fig. 4: ein erstes Anwendungsbeispiel der Vorrichtung an einem Kraftfahrzeug, bei dem der Auspuff 2 in die Karosserie integriert ist,
- Fig. 5: den Teilschnitt gemäß der Schnittlinie V-V in Fig. 4,
- Fig. 6: ein zweites Ausführungsbeispiel,
- Fig. 7: vergrößert den Saugnapf,
- Fig. 8: ein zweites Ausführungsbeispiel der Erfindung, bei dem das Befestigungselement eine Befestigungsfläche mit einer Vielzahl davon abragenden Haken ausbildet, die in die Schlaufen einer Kraftfahrzeug-Innenraumverkleidung eingreifen können,
- Fig. 9: eine perspektivische Darstellung des Befestigungselementes des zweiten Ausführungsbeispiels,
- Fig. 10: eine Seitenansicht,
- Fig. 11: eine Darstellung gemäß Fig. 10, jedoch in einer Haftverbindung des Befestigungselementes mit der Innenverkleidung, und
- Fig. 12: eine perspektivische Darstellung des zweiten Ausführungsbeispiels mit geschlossener Kofferraumklappe.

### Beschreibung der Ausführungsformen

Die Zeichnungen zeigen eine aus Kunststoff oder aus Gummi gefertigte Absaugtülle 4, die eine Eintrittsöffnung 9 zum Eintritt von aus einem Auspuff 2 eines Kfz' 1 austretenden Auspuffgasen, wenn sich das Kfz auf einem Prüfstand befindet. An die Eintrittsöffnung 9 schließt sich ein Gasströmungskanal an, der sich in Richtung einer Achse 18 erstreckt, die durch den Mittelpunkt der Fläche der Eintrittsöffnung 9 verläuft. Der Gasdurchtrittskanal endet in einer Austrittsöffnung 10, durch deren Flächenmittelpunkt die Achse 18 verläuft. Die Fläche der Austrittsöffnung 10 erstreckt sich auf einer Kreisfläche und ist kleiner als die Fläche der Eintrittsöffnung 9, die im Wesentlichen die Gestalt eines Rechtecks oder eines Trapezes aufweist, dessen Ecken verrundet sind.

Der Rand der Austrittsöffnung 10 verläuft in einer Ebene, die senkrecht zur Achse 18 verläuft. An die Austrittsöffnung 10 schließt sich ein Muffenabschnitt 11 an, auf den ein Absaugschlauch 3 aufgestülpt werden kann. An den Muffenabschnitt 11 schließt sich ein kegelförmiger Abschnitt an, der eine Durchmesserreduzierung des Strömungskanals in Strömungsrichtung bewirkt.

Zwischen diesem Reduzierabschnitt 19 und der Eintrittsöffnung 9 erstrecken sich zwei im Wesentlichen parallel zueinander verlaufende Seitenflächen 12,13, wobei eine im Gebrauch der Vorrichtung nach unten weisende Seitenfläche 12 in Achsrichtung 18 länger ist als eine im Gebrauch nach oben gerichtete Fläche 13. Die Eintrittsöffnung 9 besitzt Ränder, die sich in einer Ebene erstrecken, die um einen Winkel α geneigt zur Achse 18 verläuft, wobei der Winkel α etwa im Bereich zwischen 55° und 65°, aber auch in einem Bereich zwischen 50° und 70° liegen kann.

Zwei in der Gebrauchsstellung sich im Wesentlichen in einer Vertikalrichtung erstreckende Seitenflächen 14 verlaufen geneigt zueinander. Sie sind im Bereich des Reduzierabschnittes 19 enger benachbart als im Bereich der Eintrittsöffnung 9.

Auf der im Gebrauch nach oben weisenden Seitenfläche 13 erstrecken sich zwei richtungsgleich mit der Achse 18 verlaufende Parallelrippen 17, zwischen denen eine Aufrollvorrichtung 7 angeordnet ist. Zur Befestigung der Aufrollvorrichtung 7 an einem den Strömungskanal bildende Tragkörper können Schrauben und Muttern vorgesehen sein. Es ist insbesondere die Verwendung einer Winkelkonsole vorgesehen, um die Aufrollvorrichtung 7 formschlüssig am Tragkörper zu befestigen. Der Tragkörper, der den Strömungskanal und die Seitenwände mit den Seitenflächen 12, 13, 14 ausbildet, kann aus einem gummielastischen Werkstoff, bspw. Silikon, gefertigt sein. Die Shore-Härte kann zwischen 40 und 65 liegen und liegt bevorzugt bei etwa 65. Die Winkelkonsole 21 ist hingegen ebenso wie das Gehäuse der Aufrollvorrichtung 7 aus einem härteren Kunststoff gefertigt.

Die Aufrollvorrichtung 7 ist auf der im Gebrauch nach oben weisenden Seitenfläche 13 derart angeordnet, dass der Angriffspunkt eines Seiles oder Bandes 6 in einem Bereich zwischen Eintrittsöffnung 9 und Austrittsöffnung 10 liegt. Der Angriffspunkt des Seiles oder Bandes 6 ist somit in Richtung der Achse 18 vom Rand der Eintrittsöffnung 9 versetzt.

Die Aufrollvorrichtung 7 besitzt ein Gehäuse, in welchem sich eine Wickeltrommel 20 befindet, die von einer nicht dargestellten Spiralfeder in einer Drehrichtung kraftbeaufschlagt wird. Die Spiralfeder wird gespannt, wenn das auf der Wickeltrommel 20 aufgewickelte Band aus der Aufrollvorrichtung 7 herausgezogen wird. Die Federkraft ist ausreichend groß, um nach einem Gebrauch das Band 6 wieder auf die Wickeltrommel 20 aufzuwickeln.

Es ist ein Betätigungsknopf 15 vorgesehen, der mit einem Rastgesperre zusammenwirkt. Mit dem Rastgesperre wird die Drehbarkeit der Wickeltrommel 20 gesperrt. Durch Druck auf den Betätigungsknopf 15 kann das Rastgesperre in eine Freigabestellung gebracht werden, in der das Band bzw. Seil verlängert werden kann, bzw. verkürzt werden kann. Der Betätigungsknopf 15 besitzt somit die Funktion eines Entsperrknopfes.

Ein Handgriff 8 sitzt an dem die Aufwickelvorrichtung 7 ausbildenden Gehäuse, und zwar derart, dass der Handgriff 8 zur Austrittsöffnung 10 weist.

Am freien Ende des Bandes 6 sitzt ein Anschlussstück 16, bei dem es sich um einen Haken handeln kann, an dem ein Saugnapf 5 befestigt ist. Der Saugnapf 5 kann an einem glattwandigen Oberflächenabschnitt an der Karosserie des Kraftfahrzeuges 1 befestigt werden. Geeignete Flächen sind insbesondere die Rückleuchten, die Oberfläche einer Heckklappe, einer Stoßstange oder eines Heckfensters.

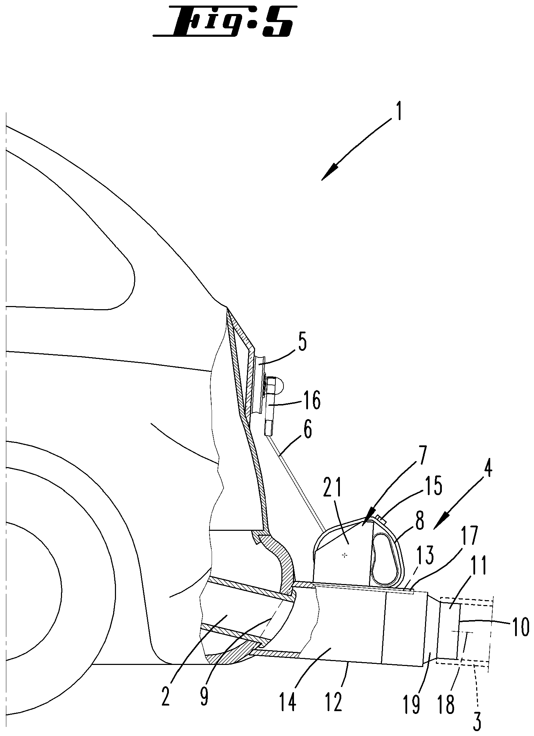

Wie die Figur 5 zeigt, verläuft das Band 6 im befestigten Zustand schräg zur Lotrichtung und ist somit nicht nur in der Lage, die Absaugtülle 4 ohne ergänzende Unterstützungsmittel oberhalb des Fußbodens zu halten. Der Schrägverlauf des Bandes 6 erzeugt darüber hinaus eine Kraftkomponente in Horizontalrichtung, mit der sich der Rand der Eintrittsöffnung 9 auf der Karosserie abstützt.

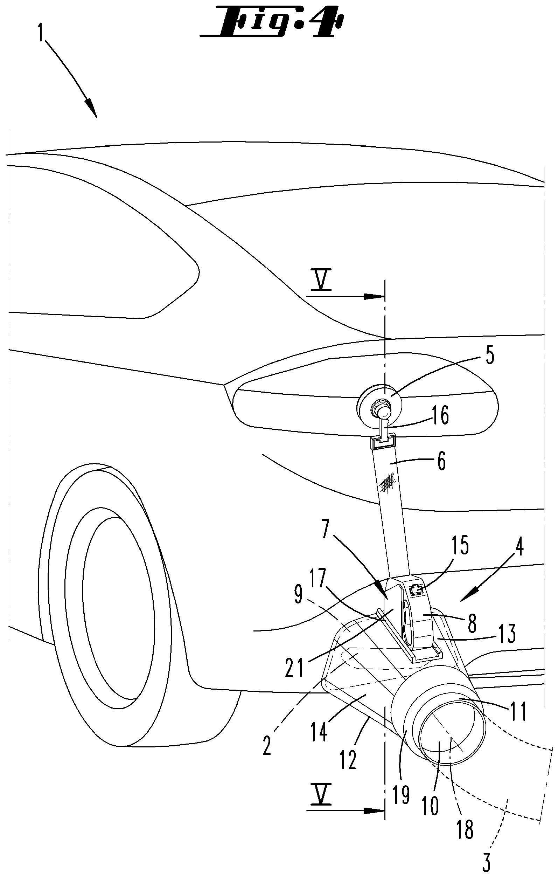

Die Figuren 4 und 5 zeigen ein erstes Anwendungsbeispiel, bei dem das Kraftfahrzeug 1 einen Auspuff 2 besitzt, der gestalterisch in die Karosserie integriert ist. Der Rand des Auspuffrohres besitzt keinen Abstandsspalt zur Karosserie, so dass dort keine Klammern oder anderweitigen Befestigungselemente aufgesetzt werden können. Die erfindungsgemäße Absaugtülle 4 wird mit ihrer Eintrittsöffnung 9 vor das Ende des Auspuffs 2 gebracht. Dabei wird der Rand der Eintrittsöffnung 9 in eine berührende Anlage zu dem Karosserieabschnitt gebracht, der den Auspuff 2 umgibt. Sodann wird mit Druck auf den Befestigungsknopf 15 das Rastgesperre entsperrt, so dass eine geeignete Länge des Bandes 6 von der Wickeltrommel 20 abgezogen werden kann. Der am Ende des Bandes 6 sitzende Saugnapf 5 wird an einer geeigneten Stelle der Rückseite des Kraftfahrzeuges 1 befestigt. Nach Loslassen des Betätigungsknopfes 15 greift die Rastvorrichtung, so dass Zugkräfte über das Band 6 auf die Absaugtülle 4 übertragen werden können.

Es ist aber auch möglich, zunächst den Saugnapf 5 an einer geeigneten Stelle oberhalb des Auspuffs 2 an der Rückseite des Kraftfahrzeuges 1 zu befestigen und anschließend mit gedrückt gehaltenem Betätigungsknopf 15 die Absaugtülle 4 in Position gebracht wird. Dabei stellt sich auf Grund der Wickelvorrichtung 7 die richtige Länge des Bandes 6 oder Seiles selbsttätig ein.

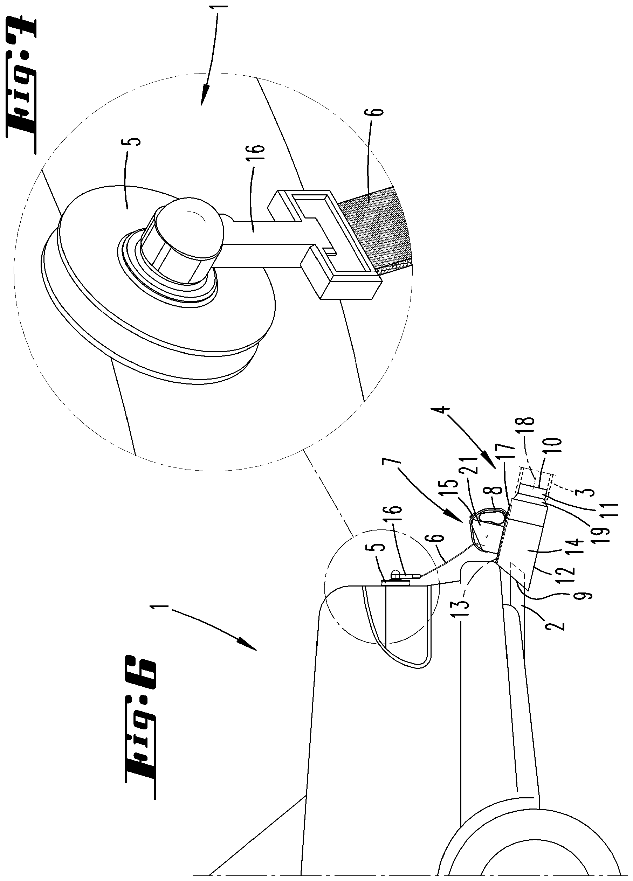

Die Figuren 6 und 7 zeigen, dass die erfindungsgemäße Vorrichtung auch an solchen Kraftfahrzeugen verwendet werden kann, bei denen der Auspuff 2 frei unterhalb der Karosserie sitzt.

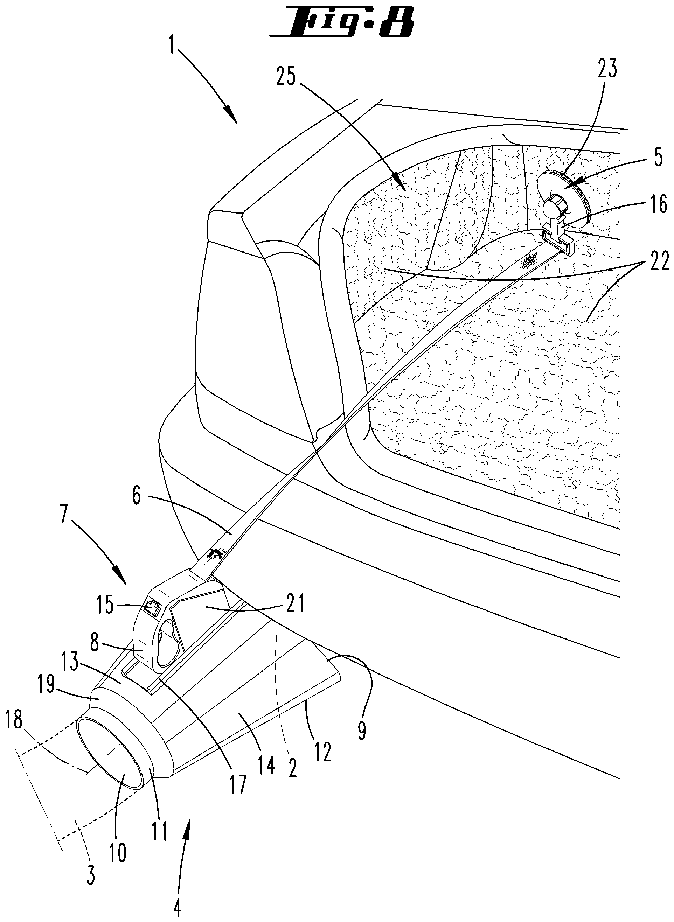

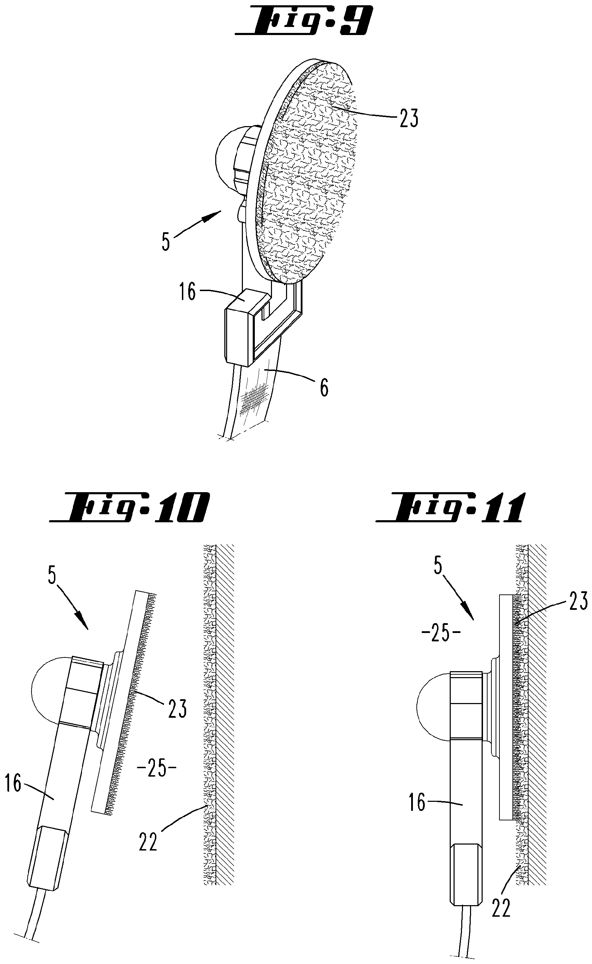

Die Figuren 8 bis 12 zeigen ein zweites Ausführungsbeispiel der Erfindung und dessen Verwendung. Das in den Figuren 9, 10 und 11 dargestellte Befestigungselement 5 ist ein Flachkörper, der auf seiner Rückseite mit einem Anschlussstück 16 mit einem Band 6 verbunden ist. Das Band 6 ist mit der Aufrollvorrichtung 7 verbunden. Auf der Frontseite ist eine Vielzahl von elastischen Haken angeordnet, die eine Hakenfläche 23 ausbilden. Die Figuren 10 und 11 zeigen, wie die Hakenfläche 23 durch Aufbringen eines Drucks in eine flächige Anlage zu einer Fläche einer textilen Innenverkleidung 22 eines Kofferraumes 25 eines Kraftfahrzeuges gebracht werden kann. Dabei verhaken sich die aus der Hakenfläche 23 herausragenden elastischen Haken mit den Schlaufen des Gewebes oder Gewirks der Innenverkleidung 22. Letztere kann ein genadeltes Gewebe oder Gewirk sein.

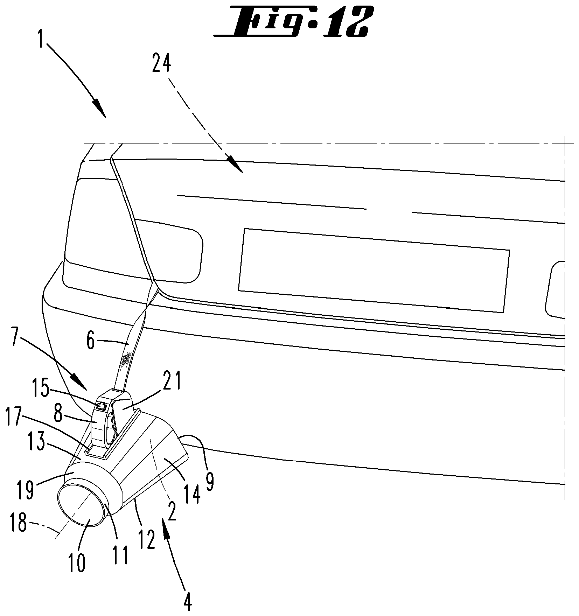

Das Befestigungselement 5 wird bevorzugt innerhalb des Kofferraumes befestigt. Es besitzt hierzu geeignete Fesselungsmittel, mit denen es im Inneren des Kofferraums befestigt werden kann. Bei den Fesselungsmitteln kann es sich bspw. um die zuvor beschriebenen Kletthaken handeln. Das Band 6 kann durch die Dichtung zwischen der geschlossenen Kofferraumklappe 24 und der Karosserie hindurchgeführt werden, wie es die Fig. 12 zeigt.

**Liste der Bezugszeichen**

| | | | |
|---|---|---|---|
| 1 | Kfz | α | Winkel |
| 2 | Auspuff | | |
| 3 | Absaugschlauch | | |
| 4 | Absaugtülle | | |
| 5 | Saugnapf | | |
| 6 | Seil, Band | | |
| 7 | Aufrollvorrichtung | | |
| 8 | Handgriff | | |
| 9 | Eintrittsöffnung | | |
| 10 | Austrittsöffnung | | |
| 11 | Muffenabschnitt | | |
| 12 | Seitenfläche | | |
| 13 | Seitenfläche | | |
| 14 | Vertikalfläche | | |
| 15 | Betätigungsknopf | | |
| 16 | Anschlussstück | | |
| 17 | Rippe | | |
| 18 | Achse | | |
| 19 | Reduzierabschnitt | | |
| 20 | Trommel | | |
| 21 | Winkelkonsole | | |
| 22 | Innenverkleidung | | |
| 23 | Hakenfläche | | |
| 24 | Kofferraumklappe | | |
| 25 | Kofferraum | | |

## Patentansprüche

1. Vorrichtung zum Absaugen von aus dem Auspuff eines Kfz' (1) austretenden Abgasen, mit einer, vor der Mündung des Auspuffs (2) platzierbaren und mit einem Absaugschlauch (3) verbindbaren Absaugtülle (4) mit oberhalb des Auspuffs am Kfz (1) befestigbaren Befestigungsmitteln (5, 6) zur Halterung der Absaugtülle am Kfz (1), wobei die Absaugtülle (4) eine Eintrittsöffnung (9) und eine Austrittsöffnung (10) besitzt,
wobei die Befestigungsmittel (5, 6) ein mit einem Verbindungselement (6) mit der Absaugtülle (4) verbundenes Befestigungselement (5) aufweisen, welches Verbindungselement (6) flexibel ist und von einem Band (6) oder Seil ausgebildet ist,
**dadurch gekennzeichnet, dass** die Vorrichtung mit einer der Absaugtülle (4) zugeordneten Aufrollvorrichtung (7) zum Verändern der Länge des Verbindungselementes vorgesehen ist,
wobei die Absaugtülle (4) bzw. die Aufrollvorrichtung (7) einen Handgriff (8) aufweist, wobei ein Betätigungsknopf (15) vorgesehen ist, der mit einem Rastgesperre zusammenwirkt mit dem die Drehbarkeit einer Wickeltrommel (20)
der Aufrollvorrichtung (7) gesperrt wird, wobei durch Druck auf den Betätigungsknopf (15) das Rastgesperre in eine Freigabestellung gebracht werden kann, in der das Band bzw. Seil verlängert werden bzw. verkürzt werden kann und wobei der Handgriff (8) an dem die Aufrollvorrichtung (7) ausbildenden Gehäuse sitzt, und zwar derart, dass der Handgriff (8) zur Austrittsöffnung (10) weist.

2. Vorrichtung nach Anspruch 1, **dadurch gekennzeichnet, dass** der Mündungsrand der Eintrittsöffnung (9) auf dem Rand eines Rechtecks oder eines Trapezes mit verrundeten Ecken verläuft.

3. Vorrichtung nach einem der vorhergehenden Ansprüche, **dadurch gekennzeichnet, dass** der Absaugschlauch (3) unmittelbar oder über ein Durchmesserreduzierstück an einer Austrittsöffnung (10) der Absaugtülle (1) befestigbar ist.

4. Vorrichtung nach Anspruch 3, **dadurch gekennzeichnet, dass** die Austrittsöffnung (10) von einem Muffenabschnitt (11) ausgebildet ist, auf den der Absaugschlauch (3) aufstülpbar ist.

5. Vorrichtung nach einem der vorhergehenden Ansprüche, **dadurch gekennzeichnet, dass** der Rand (12, 13, 14) der Eintrittsöffnung (9) sich in einer Ebene erstreckt, die um einen Winkel α von 50° bis 70° gegenüber einer durch die Flächenmittelpunkte der Austrittsöffnung (10) und der Eintrittsöffnung (9) verlaufenden Achse (18) geneigt ist, wobei eine beim Gebrauch nach unten weisende Seitenfläche (12) in Richtung der Achse (18) länger ist, als eine beim Gebrauch nach oben weisende Seitenfläche (13), auf welcher insbesondere die Aufrollvorrichtung (7) angeordnet ist.

6. Vorrichtung nach einem der vorhergehenden Ansprüche, **dadurch gekennzeichnet, dass** das Befestigungselement (5) die Form eines Hakenträgers mit einer Hakenfläche (23) aufweist, wobei die Hakenfläche (23) des Hakenträgers (5) eine Vielzahl von sich parallel erstreckenden elastischen Hakenelementen aufweist, die sich mit Schlaufen eines Schlaufengewebes klettverschlussartig verhaken können.

7. Vorrichtung nach dem vorhergehenden Anspruch, **dadurch gekennzeichnet, dass** das Befestigungselement (5) im Kofferraum (25) befestigbar ist und das am Befestigungselement (5) befestigte Band (6) durch die Dichtungen zwischen einer Kofferraumklappe (24) und der Karosserie hindurchführbar ist.

8. Vorrichtung nach einem der Ansprüche 1 bis 6, **dadurch gekennzeichnet, dass** das Befestigungselement (5) die Form eines Saugnapfes (5) aufweist.

## Claims

1. Device for extracting exhaust gases from the exhaust pipe of a motor vehicle (1), having an extraction nozzle (4) which can be placed in front of the mouth of the exhaust pipe (2) and can be connected to an extraction hose (3), having fastening means (5, 6) which can be fastened above the exhaust pipe on the motor vehicle (1) in order to hold the extraction nozzle on the motor vehicle (1), the
extraction nozzle (4) having an inlet opening (9) and an outlet opening (10),
the fastening means (5, 6) having a fastening element (5) connected to the suction spout (4) by a connecting element (6),
which connecting element (6) is flexible and is formed by a band (6) or rope
**characterised in that** the device is provided with a reeling device (7) associated with the extraction nozzle (4) for varying the length of the connecting element,
wherein the extraction nozzle (4) or the reeling device (7) has a handle (8), wherein an actuating knob (15) is provided which cooperates with a latching lock with which the rotatability of a winding drum (20) of the reeling device (7) is locked, wherein by pressing the actuating knob (15) the latching lock can be brought into a release position in which the band or rope can be lengthened or shortened respectively
and wherein the handle (8) is seated on the housing forming the reeling device (7) in such a way that the handle (8) faces the outlet opening (10).

2. Device according to claim 1, **characterised in that** an edge of the mouth of the inlet opening (9) runs on the edge of a rectangle or a trapezoid with rounded corners.

3. Device according to one of the preceding claims, **characterised in that** the extraction hose (3) can be attached directly or via a diameter reducer to an outlet opening (10) of the extraction nozzle (1).

4. Device according to claim 3, **characterised in that** the outlet opening (10) is formed by a sleeve section (11) onto which the extraction hose (3) can be fitted.

5. Device according to one of the preceding claims, **characterized in that** the edge (12, 13, 14) of the inlet opening (9) extends in a plane which is inclined by an angle of 50° to 70° with respect to an axis (18) running through the surface centres of the outlet opening (10) and of the inlet opening (9), a side surface (12) facing downwards during use being longer in the direction of the axis (18) than a side surface (13) facing upwards during use, on which side surface (13), in particular the reeling device (7), is arranged.

6. Device according to one of the preceding claims, **characterised in that** the fastening element (5) has the form of a hook carrier with a hook surface (23),
wherein the hook surface (23) of the hook carrier (5) has a plurality of parallel extending elastic hook elements which can hook with loops of a loop fabric in a Velcro-like manner.

7. Device according to the preceding claim, **characterised in that** the fastening element (5) can be fastened in the trunk (25) and the strap (6) fastened to the fastening element (5) can be passed through the seals between a trunk lid (24) and the bodywork.

8. Device according to any one of claims 1 to 6, **characterised in that** the fastening element (5) is in the form of a suction cup (5).

## Revendications

1. Dispositif, destiné à aspirer les gaz d'échappement sortant d'un échappement d'un véhicule automobile (1), pourvu d'un embout d'aspiration (4) pouvant se placer devant l'embouchure de l'échappement (2) et pouvant se relier sur un flexible d'aspiration (3), pourvu de moyens de fixation (5, 6) susceptibles de se fixer sur le véhicule automobile (1), au-dessus de l'échappement, pour maintenir l'embout d'aspiration sur le véhicule automobile (1),
l'embout d'aspiration (4) possédant un orifice d'entrée (9) et un orifice de sortie (10),
les moyens de fixation (5, 6) comportant un moyen de fixation (5), relié avec l'embout d'aspiration (4) par un élément de liaison (6), lequel élément de liaison (6) est souple et constitué d'une bande (6) ou d'un câble,
**caractérisé en ce que** le dispositif est prévu avec un dispositif d'enroulement (7), associé à l'embout d'aspiration (4), pour faire varier la longueur de l'élément de liaison,
l'embout d'aspiration (4) ou le dispositif d'enroulement (7) comportant une poignée (8),
un bouton de manœuvre (15) étant prévu, qui interagit avec un mécanisme d'arrêt, qui bloque la capacité de rotation d'un tambour enrouleur (20) du dispositif d'enroulement (7), par pression sur le bouton de manœuvre (15), le mécanisme d'arrêt pouvant être amené dans une position de libération, dans laquelle la bande ou le câble peut être rallongé(e) ou raccourci(e), la poignée (8) étant logée sur le boîtier formant le dispositif d'enroulement (7), à savoir de telle sorte que la poignée (8) soit dirigée vers l'orifice de sortie (10).

2. Dispositif selon la revendication 1, **caractérisé en ce que** le bord de l'embouchure de l'orifice d'entrée (9) s'écoule sur le bord d'un rectangle ou d'un trapèze aux angles arrondis.

3. Dispositif selon l'une quelconque des revendications précédentes, **caractérisé en ce que** le flexible d'aspiration (3) est susceptible d'être fixé directement ou par l'intermédiaire d'un réducteur de diamètre sur un orifice de sortie (10) de l'embout d'aspiration (1).

4. Dispositif selon la revendication 3, **caractérisé en ce que** l'orifice de sortie (10) est constitué d'un segment de manchon (11) sur lequel le flexible d'aspiration (3) peut s'enfoncer.

5. Dispositif selon l'une quelconque des revendications précédentes, **caractérisé en ce que** le bord (12, 13, 14) de l'orifice d'entrée (9) s'étend dans un plan qui est incliné de la valeur d'un angle (α) de 50° à 70° par rapport à un axe (18) s'écoulant à travers les centres de surface de l'orifice de sortie (10) et de l'orifice d'entrée (9), une surface latérale (12) dirigée vers le bas en cours d'utilisation étant plus longue en direction de l'axe (18) qu'une surface latérale (13) dirigée vers le haut en cours d'utilisation, sur laquelle est placé notamment le dispositif d'enroulement (7).

6. Dispositif selon l'une quelconque des revendications précédentes, **caractérisé en ce que** l'élément de fixation (5) présente la forme d'un support de crochets, pourvu d'une surface à crochets (23),
la surface à crochets (23) du support de crochets (5) comportant une pluralité d'éléments en crochets élastiques s'étendant à la parallèle, susceptibles de s'accrocher à la manière d'une fermeture autoagrippante dans les boucles d'un tissu à boucles.

7. Dispositif selon l'une quelconque des revendications précédentes, **caractérisé en ce que** l'élément de fixation (5) peut se fixer dans le coffre (25) et **en ce que** la bande (6) fixée sur l'élément de fixation (5) peut se passer à travers les joints entre un couvercle de coffre (24) et la carrosserie.

8. Dispositif selon l'une quelconque des revendications 1 à 6, **caractérisé en ce que** l'élément de fixation (5) présente la forme d'une ventouse.
